# EUROPEAN PATENT APPLICATION

(11) **EP 0 820 883 A1**
(43) Date of publication of application: **28.01.1998**
(21) Application number: 97305497.6
(22) Date of filing: 23.07.1997
(51) Int. Cl.: B60C 9/22, B60C 9/20

(54) **Motor-cycle radial tyre**

(30) Priority: 25.07.1996 GB 9615685
(71) Applicant: SUMITOMO RUBBER INDUSTRIES LIMITED, Kobe-shi, Hyogo-ken (JP)
(72) Inventor: Watkins, David Robert, Sutton Coldfield, West Midlands B74 3EG (GB)
(74) Representative: Stewart, Charles Geoffrey

(57) **Abstract**

A radial motor-cycle tyre (1) comprising a tread (2) reinforced between its edges (3,4) by a breaker assembly and a third breaker ply and having in its normally inflated fitted condition a camber value C/L of between 0.5 and 0.7, a reinforcing carcass ply (14) of radially disposed cords extending radially inside the breaker assembly and between two bead regions (10,11) and wrapped in each bead region around an annular bead core (12,13) from the axial inside to the outside to form carcass ply turn-ups (15,16) and between the tread edges (3,4) and bead regions (10,11), tyre sidewalls (8,9) wherein the breaker assembly comprises two breaker plies (5,7) comprising aromatic polyamide cords oppositely inclined with respect to the circumferential direction of the tyre and the third breaker ply(6) is disposed immediately radially outwardly of the breaker assembly characterised by a third breaker ply (6) comprising aromatic polyamide reinforcing cords disposed at an angle of 5° or less to the circumferential direction of the tyre, extending axially in the central region of the tread and having a n axial width (s) of no greater than 30% of the tread width (TW).

## Description

This invention relates to radial motor-cycle tyres and in particular but not exclusively to high performance or race motor-cycle tyres.

Such tyres utilise very wide treads which in transverse cross-section are sharply curved to provide good contact with the road surface when the motor-cycle is steeply banked in cornering. Maintenance of a consistent ground contact area or 'tyre footprint' under all conditions is a major problem in determining general vehicle handling. Of particular importance in race motor-cycle tyres of radial construction is the provision of high cornering power with the good stability to maximise cornering speeds under race conditions.

Present radial motor-cycle race tyres have short sidewalls which extend to the tread edges radially and axially outwardly from the tyre beads. The beads provide engagement to the wheelrim on tapered bead seats. The sidewalls are reinforced by radial carcass plies which when tensioned by the inflation pressure act together with sidewall geometry to provide location of the curved tread regions to withstand cornering forces.

The sharply curved tread region of the tyre is specially reinforced by a reinforcing breaker to give the required structural rigidity to allow for banking over of the motorcycle when cornering whilst giving sufficient flexibility to allow localised tread flattening in the ground contact patch for good road grip.

Such tyres however, due to their uniform breaker structures, do not provide fully optimum stability and lateral grip. It therefore an object of the present invention is to improve the properties of such tyres.

According to one aspect of the present invention a radial motor-cycle tyre comprises a tread reinforced between its edges by a breaker assembly and a third breaker ply and having in its normally inflated fitted condition a camber value C/L of between 0.5 and 0.7, a reinforcing carcass ply of radially disposed cords extending radially inside the breaker assembly and between two bead regions and wrapped in each bead region around an annular bead core from the axial inside to the outside to form carcass ply turn-ups and between the tread edges and bead regions, tyre sidewalls wherein the breaker assembly comprises two breaker plies comprising aromatic polyamide cords oppositely inclined with respect to the circumferential direction of the tyre and the third breaker ply is disposed immediately radially outwardly of the breaker assembly characterised by a third breaker ply comprising aromatic polyamide reinforcing cords disposed at an angle of 5° or less to the circumferential direction of the tyre, extending axially in the central region of the tread and having an axial width of no greater than 30% of the tread width.

By camber value is meant the ratio C/L between the radial distance C from the centre to the edge of the tyre tread and the axial distance L between the centre and edge of the tread.

Preferably the width of the third breaker ply in the axial direction is not less than 20% of the tread width.

Preferably the cords of the breaker plies are inclined at between 16 and 30 degrees.

The third breaker ply may comprise a single aromatic polyamide (aramid) cord spirally wound around the tyre across the breaker assembly or it may comprise a plurality of between 2 and 8 cords formed side by side in a tape and wound spirally around the tyre. The cord or cords are preferably embedded in a rubber compound.

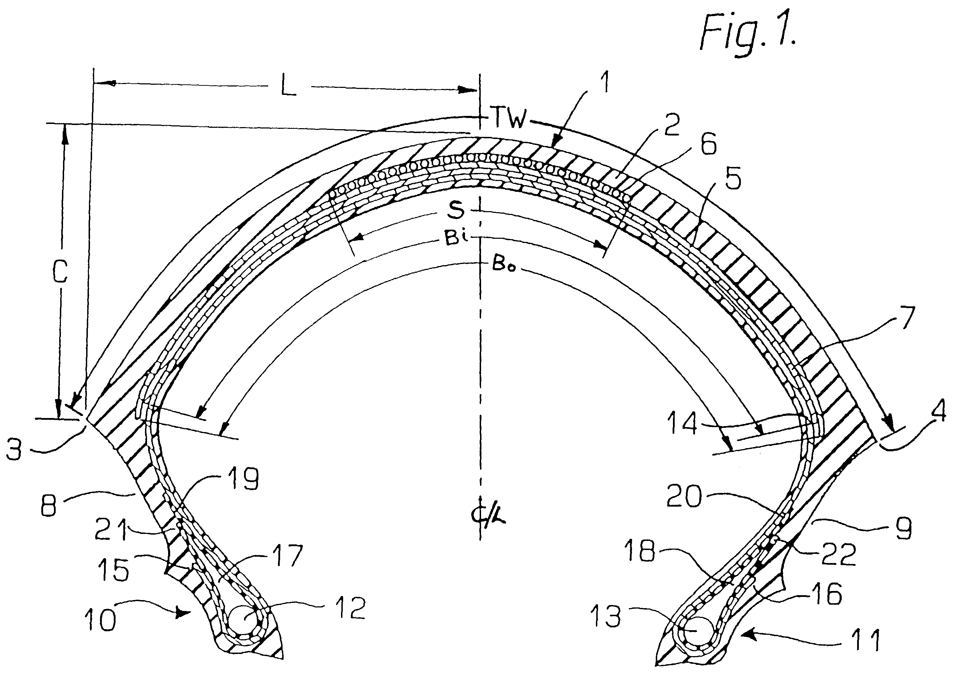

Further aspects of the present invention will become apparent from the description of the following embodiments in conjunction with the attached diagrammatic drawing in which:-
Figure 1 shows in cross-section a 170/60 R17 radial motor-cycle tyre intended for high speed racing.

The tyre 1 of Figure 1 comprises a pair of sidewalls 8 and 9 terminating in bead regions 10 and 11. Each bead region is reinforced by an inextensible annular bead core 12 and 13. Extending between each bead region is a tyre carcass reinforcement ply 14 which is anchored in each bead region by being turned around the respective bead core 12,13 laterally from the inside to the outside to form a ply turn-up 15,16. The carcass reinforcement ply 14 comprises a single ply of nylon tyre fabric laid with the cords substantially radially. Each read region 10,11 further comprises a hard rubber apex member 17,18 which is anchored to each respective bead core 12,13 and extends taperingly radially outwardly.

The tyre 1 has a camber value of 0.6 and comprises a convex tread region 2, having tread edges 3,4, reinforced by a breaker assembly. The width TW of the tread is 220mm measured along the outer surface. The breaker assembly comprises two breaker plies 6 and 7 each of which comprises Kevlar (Registered Trade Mark) aramid cord tyre fabric each of 2/165 TEX. The cords in each of the breaker plies 6 and 7 are oppositely inclined to each other at an angle of 25° to the circumferential direction of the tyre. The radially inner breaker ply 7 has a width Bi of 200mm and is narrower than the radially outer breaker ply 5 which has a width Bo of 220mm.

Radially outside and immediately adjacent to the main breaker plies in the central region of the tread is a third breaker ply 6 reinforced by rubber covered single aramid cord of 2/110 TEX. The third breaker ply 6 is disposed centrally about the axial centreline CL of the tyre. The third breaker ply 6 was formed by winding the cord in a spiral manner around the tyre circumference and across the full width of the breaker assembly overlapping the ends of the outermost wider ply 7 by a small amount. Formed in this manner the cord of the third breaker ply 6 lies at substantially 0° to the circumferential direction of the tyre.

The third breaker ply 6 has a width S of 60mm which is 27% of the tread width TW. If the third breaker ply width exceeds 30% of the tread width then the improvement in lateral grip during cornering deteriorates. It is also preferable that the width of the third breaker ply is not less than 20% of the tread width in order that the hoop strength in the central area is sufficient to give good stability.

The resultant tyres have been found to have improved cornering power and stability under all conditions and improved grip particularly lateral grip when the tyre is running under camber. This construction has also been shown to give superior fatigue life.

Whilst the above-described embodiment has a third breaker ply formed by a single rubber coated aramid cord spirally wound around the tyre the third breaker ply may be formed from a spirally wound tape comprising between 2 and 8 cords laid side by side and embedded in rubber. The third breaker ply may also be formed by winding around the circumference of the breaker assembly a strip having a width S and comprising plural aramid cord disposed longitudinally.

## Claims

1. A radial motor-cycle tyre (1) comprising a tread (2) reinforced between its edges (3,4) by a breaker assembly and a third breaker ply (6) and having in its normally inflated fitted condition a camber value C/L of between 0.5 and 0.7, a reinforcing carcass ply (14) of radially disposed cords extending radially inside the breaker assembly and between two bead regions (10,11) and wrapped in each bead region around an annular bead core (12,13) from the axial inside to the outside to form carcass ply turn-ups (15,16) and between the tread edges (3,4) and bead regions (10,11), tyre sidewalls (8,9) wherein the breaker assembly comprises two breaker plies (5,7) comprising aromatic polyamide cords oppositely inclined with respect to the circumferential direction of the tyre and the third breaker ply (6) is disposed immediately radially outwardly of the breaker assembly characterised by a third breaker ply (6) comprising aromatic polyamide reinforcing cords disposed at an angle of 5° or less to the circumferential direction of the tyre, extending axially in the central region of the tread and having an axial width (S) of no greater than 30% of the tread width (TW).

2. A radial motor-cycle tyre according to claim 1, characterised in that the third breaker ply has an axial width (S) of not less than 20% of the tread width.

3. A motor-cycle radial tyre according to claim 1 or 2, characterised in that the cords of the breaker plies (5,7) are inclined at 16 to 30 degrees with respect to the circumferential direction of the tyre.

4. A motor-cycle tyre according to claim 3, characterised in that the cords of the breaker plies (5,7) are inclined at 25 degrees with respect to the circumferential direction of the tyre.

5. A motor-cycle radial tyre according to any of claims 1 to 4, characterised in that the third breaker ply (6) comprises a single cord spirally wrapped around the circumference of the tyre.

6. A motor-cycle radial tyre according to any of claims 1 to 4, characterised in that the third breaker ply (6) comprises a plurality of between 2 and 8 cords laid side by side in the form of a tape which is spirally wound around the tyre.

7. A motor-cycle tyre according to claims 1 to 4, characterised in that the third breaker ply (6) comprises a single wrap of a strip of full width S comprising plural cords disposed longitudinally.

8. A motor-cycle radial tyre according to any of claims 1 to 7, characterised in that the radially outermost breaker ply (5) is wider than the radially innermost breaker ply (7).

9. A motor-cycle tyre according to any of claims 1 to 8, characterised in that the widest breaker ply is substantially the same width as the tread.

10. A motor-cycle radial tyre according to any of claims 1 to 9, characterised in that the third breaker ply (6) comprises cord reinforcement embedded in rubber.
